Europäisches Patentamt

**European Patent Office**

**Office européen des brevets**

(19)

(11) Publication number: **0 128 662**
A2

# EUROPEAN PATENT APPLICATION

(12)

(21) Application number: 84303142.8

(22) Date of filing: **09.05.84**

(51) Int. Cl.³: **B 60 R 22/28**, B 60 R 21/10

(30) Priority: **11.05.83 JP 69944/83**
**13.01.84 JP 3850/84**

(43) Date of publication of application: **19.12.84**
**Bulletin 84/51**

(84) Designated Contracting States: **DE GB SE**

(71) Applicant: **TOYOTA JIDOSHA KABUSHIKI KAISHA, 1,**
**Toyota-cho Toyota-shi, Aichi-ken 471 (JP)**

(72) Inventor: **Yoshitusgu, Noritada, No. 1, Toyota-Cho,**
**Toyota-shi Aichi-ken (JP)**

(74) Representative: **Ben-Nathan, Laurence Albert et al, c/o**
**MICHAEL BURNSIDE & PARTNERS 2 Serjeants' Inn**
**Fleet Street, London EC4Y 1HL (GB)**

(54) **Safety belt.**

(57) A safety belt (S) has a continuous webbing (W) composed of a shoulder side outer webbing piece (W1) extending from an upper strengthening member (5) at the side of an automotive body for restricting the breast of an occupant sitting on a seat and a lap side outer webbing piece (W2) exending from a lower strengthening member (A) at the side of the body for restricting the waist of the occupant. The continuous webbing has at least one annularly folded portion (1; 10) which is formed in the continuous webbing (W) and has a plurality of U-shaped sewing patterns (4) separately sewn adjacent to each other in the folded portion. This construction enables the stretching characteristics of the shoulder and lap side outer webbing pieces of the continuous webbing to be formed different from one another to provide buffer and energy absorbing functions of the continuous webbing (W), thereby further improving the performance of a conventional safety belt.

## SAFETY BELT

The present invention relates to improvements in safety belts mounted adjacent seats in vehicles.

In a conventional safety belt, as disclosed, for example, in U.S. Patent No. 3,861,744, Japanese Patent Application Laid-open No. 118,764/1980 and Japanese Utility Model Application Laid-open No. 2027/1974, which is composed of a continuous webbing having a shoulder side outer webbing piece and a lap side outer webbing piece mounted on a seat for a vehicle, the stretching characteristic of the shoulder and lap side outer webbing pieces cannot be formed to be different from one another.

An object of the present invention is to provide a safety belt in which the stretching characteristics of the shoulder and lap side outer webbing pieces of a continuous webbing are formed to be different from each other to provide the continuous webbing with buffer and energy absorbing functions, thereby further improving the performance of a conventional safety belt.

According to the present invention in order to achieve the above and other objects, there is provided a safety belt which comprises a continuous webbing composed of a shoulder side outer webbing piece extending from an upper stengthening member at the side of an automotive body for restricting the breast of an occupant sitting on a seat and a lap side outer webbing piece extending from a lower strengthening member at the side of the body for restricting the waist of the occupant, said continuous webbing having a plurality of annularly folded portions formed therein, each portion including a plurality of sewing patterns sewn separately at positions adjacent to each other in the folded portion.

In operation, the stretching characteristics of the shoulder and lap side outer webbing pieces are formed to be different from one another by extending the superposing parts of an energy absorbing member provided in the continuous webbing by means of the sewing yarns of the plurality of sewing patterns of the energy absorbing member, which are fractured in use thereby enabling energy to be absorbed.

In this manner according to the present invention, elongation of the webbing piece provided with the energy absorbing member can be selectively regulated by adjusting the length of the annularly folded portion and the number of U-shaped sewing patterns provided in the continuous webbing. Accordingly, a safety belt adapted for an occupant sitting on the seat of a vehicle can be specifically designed as required. Further, since the rise of the tensile load of the safety belt can be largely absorbed by the elongation and plasticity of the webbing piece which is provided with the energy absorbing member, the peak of the tensile load can be remarkably reduced.

The above and other related objects and features will become more apparent from the following description of the preferred embodiments of the present invention when read in connection with the accompanying drawings, in which:-

Fig. 1 is a perspective view showing an embodiment of a safety belt according to the present invention;

Fig. 2 is a perspective view showing the safety belt provided with two energy absorbing members of the type shown in Fig. 1;

Fig. 3 is a perspective view showing a continuous webbing embodying the present invention;

Fig. 4 is a perspective view showing an energy absorbing member provided in the safety belt, with three sutures inserted in the member; and

Fig. 5 is a perspective view showing an energy absorbing member covered with a boot.

The present invention will now be described in more detail with reference to the accompanying drawings.

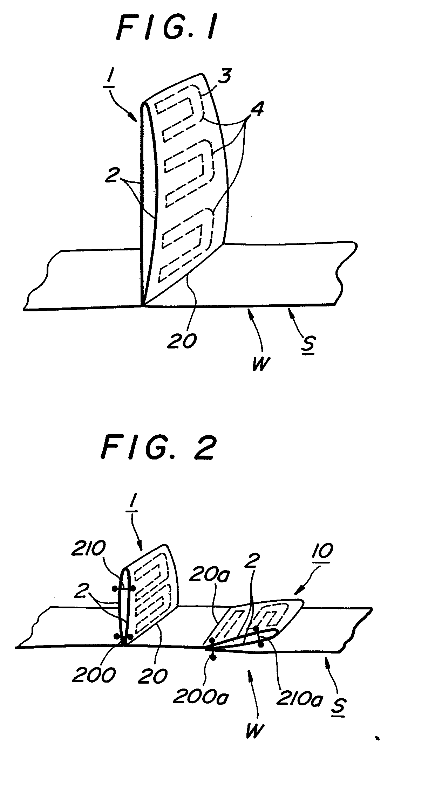

Fig. 1 shows an embodiment of a safety belt of the present invention. an energy absorbing member 1 is formed by an annularly folded portion 2 of the continuous webbing W when partly slackened. The folded portion 2 is sewn together with sewing yarns 3 in a plurality of U-shaped sewing patterns 4 aligned longitudinally of the webbing adjacent to each other so that in use the fracture load of the sewing yarns 3 is readily controlled.

Fig. 2 shows another embodiment of a safety belt of the invention in which two energy absorbing members 1 and 10 are formed in the continuous webbing W. The end 200 of the annularly folded portion 2 at a root 20 of the energy absorbing member 1 is sewn with an end suture, and the other end 210 of the annularly folded portion 2 is also sewn with another end suture.

The end 200a of the annularly folded portion 2 at a root 20a of the energy absorbing member 10 is superposed and sewn in a triple layer with the continuous webbing W with an end suture, and the other end 310a of the annularly folded portion 2 is also sewn with another end suture. Thus, the numbers of the webbing pieces superposed and folded to form the energy absorbing members 1 and 10 are different so as to be sequentially broken in a specific order of fracture thereof.

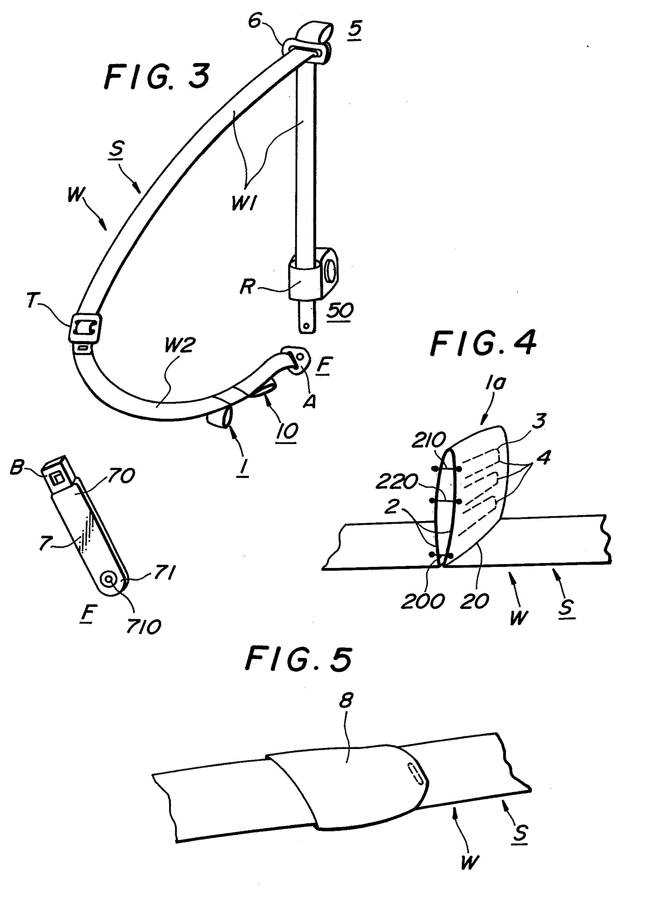

Fig. 3 shows still another embodiment of a safety belt of the invention in which a lap side outer webbing piece W2 formed with the energy absorbing members 1 and 10 as shown in Fig. 2 is provided in the continuous webbing W of a safety belt S composed of a shoulder side outer webbing piece W1 extending between an upper strengthening member 5 and a lower strengthening member 50 at the side of an automotive body and a lap side outer webbing piece W2. A single energy absorbing member may be provided in another embodiment.

The shoulder side outer webbing piece W1 is constructed to extend from a retractor R and to be folded by means of a through ring 6. Further, a tongue member T is slidably inserted at an intermediate position of the continuous webbing W composed of the shoulder and lap side outer webbing pieces Wa and W2. This tongue T may be detachably attached to a buckle B provided at one end 70 of a lap inner belt securing member 7. A hole 710 of the other end of the member 7 is mounted by fittings (not shown) on a floor F of an automotive body.

The reference character A designates an anchor for fixing the end of the lap side outer webbing W2 to the floor F of the body. It is noted that any number of annularly folded portions 2 may be provided. It is further noted that the annularly folded portions 2 may be formed in the lap side outer webbing piece W2, as shown in Fig. 3 and may also be formed in the shoulder side outer webbing piece W1.

Fig. 4 shows still another embodiment of a safety belt of the invention in which the energy absorbing member 1a is sewn with, in addition to an end suture 200 at the end of the root 20 and the other end suture 210 at the other end thereof, an intermediate suture 220 at a position intermediate the end suture 200 and the other end suture 210 to provide three pieces in number. In this manner, the stretching characteristic of the shoulder and lap side outer webbing pieces W1 and W2 are readily selectively varied by extending the folding margins of the energy absorbing member 1(10) form in the continuous webbing W by means of the fracture of the sewing yarns 3 of a plurality of U-shaped sewing patterns 4 of the annularly folded portion 2 forming the energy absorbing member 1(10), thereby satisfying the buffering function and the energy absorbing function of the continuous webbing W.

Fig. 5 shows a modified example of a safety belt of the invention in which the external appearance of the energy absorbing piece extended from the continuous webbing W is improved by covering the continuous webbing W with a cover 8 of boot shape.

CLAIMS

1. A safety belt having a continuous webbing composed of a shoulder side outer webbing piece extending from an upper strengthening member at a side of an automotive body for restricting the breast of an occupant sitting on a seat and a lap side outer webbing piece extending from a lower strengthening member at the side of the body for restricting the waist of the occupant, characterised in that said continuous webbing (W) comprises at least one annularly folded portion (2) formed in said continuous webbing and having a plurality of sewing patterns (4) separately sewn adjacent to each other in the folded portion (2).

2. A safety belt according to Claim 1, wherein said annularly folded portion (2) is formed by partly slackening said continuous webbing.

3. A safety belt according to Claim 1 or Claim 2, wherein the sewing patterns (4) sewn in said annularly folded portion (2) is constituted by a plurality of U-shaped sewing patterns sewn by sewing yarns (3).

4. A safety belt according to any of Claims 1 to 3, wherein said annularly folded portion (2) is sewn at one end at the root (200) thereof and at the other end (210), with two sutures, respectively.

5. A safety belt according to any of Claims 1 to 4, wherein said annularly folded portion (2) is superposed and sewn at the root (200a) thereof onto said continuous webbing (W) to form a triple layer.

- 7 -

0128662

6. A safety belt according to any of Claims 1 to 5, wherein said annularly folded portion (2) is sewn at one end (200) at the root thereof, at the other end (210) and at an intermediate position (220) between the one end and the other end, with three sutures, respectively.

7. A safety belt according to any of Claims 1 to 6, wherein said annularly folded portion (2) is covered with a cover (8) of boot shape.

−1/2

# FIG. I

# FIG. 2

0128662

FIG. 3

FIG. 4

FIG. 5